# EUROPEAN PATENT SPECIFICATION

(11) **EP 3 525 398 B1**
(45) Date of publication and mention of the grant of the patent: **29.12.2021**
(21) Application number: 17899621.1
(22) Date of filing: 01.06.2017
(51) Int. Cl.: H04L 12/24, H04L 12/26, H04L 29/06

(54) **PROTECTION METHOD AND SYSTEM FOR CDN CLIENT SOURCE STATION**
SCHUTZVERFAHREN UND -SYSTEM FÜR EINE CDN-CLIENT-QUELLENSTATION
PROCÉDÉ ET SYSTÈME DE PROTECTION POUR STATION SOURCE DE CLIENT CDN

(30) Priority: 10.03.2017 CN 201710140021
(43) Date of publication of application: 14.08.2019
(73) Proprietor: Wangsu Science & Technology Co., Ltd., Xuhui District Shanghai 200030 (CN)
(72) Inventor: CHEN, Weicai, Shanghai 200030 (CN); ZHANG, Fengli, Shanghai 200030 (CN)
(74) Representative: de Arpe Fernandez, Manuel
(86) International application number: PCT/CN2017/086806
(87) International publication number: WO 2018/161447

(56) References cited:
- CN-A- 102 801 792
- CN-A- 103 023 998
- CN-A- 103 746 870
- US-A1- 2014 173 024
- US-A1- 2016 352 603
- US-B1- 9 549 043

## Description

### FIELD OF THE DISCLOSURE

The present disclosure generally relates to the network technology and, more particularly, relates to a method and system for protecting a CDN client source station.

### BACKGROUND

A CDN (Content Delivery Network) is basically understood to provide web station acceleration and CPU load balancing, thus solving issues such as a slow website opening speed induced by switching of service providers, switching of regions, a too low loading capability of the servers, or a too low bandwidth, etc. The basic principles of the CDN is to avoid bottlenecks and steps in the internet that affect data transmission speed and stability as much as possible, thereby allowing content delivery to be faster and more stable. Via the layer of intelligent virtual network constituted by node servers placed all over the network on basis of the existing internet, the CDN system may re-direct the user request to the server node nearest to the user based on comprehensive information such as the network traffic flow, the connection and loading conditions of each node, the distance from the nodes to the user, and the response time. The objective of the CDN system is enabling the user to obtain the needed content as convenient as possible, solve the situation of Internet congestion, and improve the response speed of the website that the user visits.

The traditional CDN client source station often manually determines whether an attack occurs or the service encounters an issue, or may issue a control command once a corresponding back-to-source bandwidth exceeds a certain threshold to reduce the back-to-source traffic towards the CDN nodes, thereby protecting the client source station. The effectiveness and accuracy of such method are both relatively poor. Further, because the entire network is controlled when protection is provided, differentiation control cannot be carried out for clients in a specific region or for a specific service of the clients to maximally protect the clients' benefits. Further, the existing protection method of the CDN client source stations are mostly protection, which fails to look into the original sources of the occurred issues by analyzing relatively complete practical data in the protection process.

The document US 9,549,043 B1 discloses a system and a method of allocation of resources in a content delivery environment.

### BRIEF SUMMARY OF THE DISCLOSURE

To solve issues in the existing technology, the present disclosure provides a method and system for protecting CDN source station of a client. The technical solutions are as described in the claims.

Beneficial effects of the technical solutions provided by the present disclosure include: collecting an indicator parameter from a source station of a client, and collecting a dimension parameter from a CDN edge node wherein the indicator parameter indicates a service ability of the source station, and the dimension parameter includes a back-to-source bandwidth, a back-to-source request number, current connection data, back-to-source time, a back-to-source status code ratio, or a feature of an IP that requests the source station of the client; obtaining source station load data, back-to-source status data, and client behavioral data after processing the collected indicator parameter and the dimension parameter; analyzing the source station load data, the back-to-source status data, and the client behavioral data to obtain prediction data; determining the source station service status based on the prediction data; when the source station service status is abnormal, generating a corresponding control strategy in conjunction with the collected indicator parameter and dimension parameter; and executing the control strategy. Via a relatively precise prediction, protection of the source station may be more timely and accurately. Under conditions when the source station service encounters an issue, the service quality of the client may be maximally ensured via differentiation configuration. Through analysis of big data, the reason that causes the issue of the source station service may be found as much as possible, and whether the source station is truly stable and is able to fully recover service may be automatically and more reality determined.

### BRIEF DESCRIPTION OF THE DRAWINGS

To more clearly illustrate the technical solution in the present disclosure, the accompanying drawings used in the description of the disclosed examples are briefly described hereinafter. Obviously, the drawings described below are merely some examples of the present disclosure. Other drawings derived from such drawings may be obtainable by those ordinarily skilled in the relevant art without creative labor.
FIG. 1 is a flow chart of a method for protecting CDN client source station according to Example 1 of the present disclosure;
FIG. 2 is a flow chart of a method for protecting CDN client source station describing Example 2 of the present disclosure;
FIG. 3 is a structural schematic view of a system for protecting CDN client source station describing Example 3 of the present disclosure; and
FIG. 4 is a structural schematic view of a system for protecting CDN source station of a client describing Example 4 of the present disclosure.

### DETAILED DESCRIPTION

To more clearly describe the objectives, technical solutions and advantages of the present disclosure, examples of the present disclosure will be made in detail with reference to the accompanying drawings hereinafter.

### Example 1

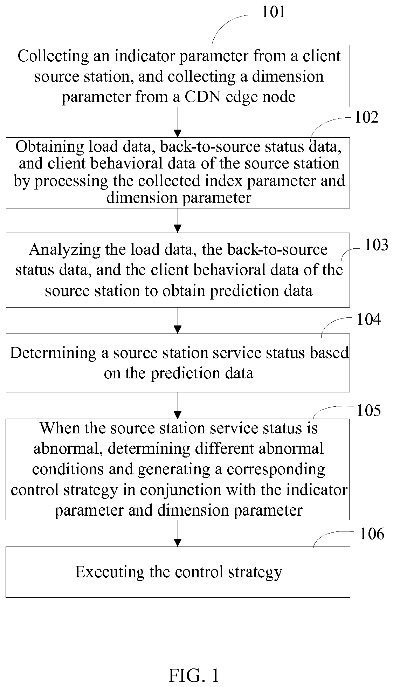

Referring to FIG. 1, Example 1 of the present disclosure provides a method for protecting CDN client source station, comprising Step 101∼Step 106, as described in detail hereinafter.

In Step 101, an indicator parameter is collected from a client source station, and a dimension parameter from a CDN edge node is collected.

The indicator parameter includes at least one of an IO consumption and a load consumption. The dimension parameter includes a back-to-source bandwidth, a back-to-source request number, current connection data, back-to-source time, a back-to-source status code ratio, and a feature of an IP that requests the source station.

More specifically, the client source station provides an API interface, and invokes the API interface periodically, thereby collecting and establishing with a client the indicator parameter that feedbacks a service ability of the source station. The CDN edge node provide an API interface, and invokes the API interface periodically, thereby collecting various dimension parameters of the CDN edge node.

In Step 102: source station load data, back-to-source status data, and client behavioral data are obtained after processing the collected indicator parameter and dimension parameter.

More specifically, mean value calculation is performed after de-noising using the collected load data of the source station, and a current status of the source station is calculated by comparison with a historical numerical value from a dimension of a service ability of the source station. The service ability is calculated after de-noising using the collected back-to-source status data.

For data of each dimension, a corresponding impact ratio coefficient is configured, different impact ratio coefficients reflect a judging standard of the impact of such data on service stability of an actual client source station, and the sum of different weights is 100. The prediction data is obtained based on the source station load data, the back-to-source status data, and the client behavioral data by performing a following calculation: a source station status value = an abnormal score of the back-to-source bandwidth + an abnormal score of the back-to-source request number + an abnormal score of a back-to-source time + an abnormal score of a back-to-source status code ratio + an abnormal score of a current source station connection number. A higher source station status value indicates a poorer service ability, and a lower the source station status value indicates a stronger service ability. More specifically, an abnormal score of the back-to-source bandwidth = an amplitude that the back-to-source bandwidth deviates from the abnormal value * a weight coefficient of the back-to-source bandwidth. An abnormal score of the back-to-source request number = an amplitude of the abnormal value of the back-to-source request number * a weight coefficient of the back-to-source request number. An abnormal score of the back-to-source time (e.g., response time of the back-to-source request) = an amplitude of the abnormal value of the back-to-source response time * a weight coefficient of the back-to-source response time. An abnormal score of the back-to-source status code ratio (e.g., responsive status code ratio of the back-to-source request) = an amplitude of the abnormal value of the responsive status code ratio * a weight coefficient of the responsive status code ratio of the back-to-source request. An abnormal score of a current source station connection number = an amplitude of the abnormal value of the current source station connection number * a weight abnormal coefficient of the current source station connection number. The source station status value = the abnormal score of back-to-source bandwidth + the abnormal score of back-to-source request number + the abnormal score of back-to-source time (e.g., response time of the back-to-source request) + an abnormal score of a back-to-source status code ratio (e.g., responsive status code ratio of the back-to-source request) + an abnormal score of a current source station connection number. The higher the source station status value, the poorer the service ability, and the lower the source station status value, the stronger the service ability. It should be noted that, the abnormal points considered by different client source station may be different, and determination may be performed based on actual abnormal points.

In Step 103: the source station load data, the back-to-source status data, and the client behavioral data are analyzed to obtain prediction data.

Further, for the data after statistical analysis, a prediction method may be used again to improve timeliness, and given the load as an example, a function of cubic spline interpolation is used. The first derivative and the second derivative are first obtained, if the rate is positive, the load is indicated to increase, and if the acceleration is negative, the rate is indicated to decrease and finally change to 0. The cubic spline interpolation function may predict relatively complex modes, and is not limited to predict linear modes. The interpolation function may solve the vibration problem: the indicator collection and the reaction delay may indicate that the value is outdated, the interpolation may reduce error, the prediction may be more accurate, and the vibration may be decreased. Via loading, the preset value may be approached. The current predictions are all based on the first three time intervals, and under situations where the time interval is relatively short, the obtained results are almost real-time results.

In Step 104: the source station service status is determined based on the prediction data.

More specifically, a subsequent value is deduced via a previous value and a current value and based on multi-dimensional data such as back-to-source time of a CDN node, a responsive status code ratio, and a current actual normal or abnormal connection number, thereby obtaining relatively accurate prediction data. Further, based on the prediction data, the source station service status may be determined.

In Step 105: when the source station service status is abnormal, generating a corresponding control strategy is generated in conjunction with the collected indicator parameter and dimension parameter.

In particular, the control strategy at least includes a regional control strategy (control is performed with reference to regional features of different IPs), a service control strategy, a black and white name strategy, and an access number restriction strategy.

When the source station service encounters an issue, control is carried out on different aspects including specific IP, specific region of visiting client, and specific client service. Under situations where the service ability of the source station is ensured, effective source station access may be maximally provided, thereby ensuring the client's benefits.

In Step 106: the control strategy is executed.

More specifically, based on the abnormal points fed back by the source station, for different abnormal conditions and major factors that affect the abnormity, different types of control strategies may be generated by integrating the differential demand of the source station client, such as the high-to-low preference of the visiting region, and the high-to-low preference of the source station related service, etc. After the proxy server receives the information, different strategies may be applied to invoke API interfaces that are not used by the CDN edge node to convey the strategy, thereby realizing protection of the source station.

In the disclosed method of protecting the CDN client source station, the indicator parameter is collected from the client source station, and the dimension parameter is collected from the CDN edge node; the collected indicator parameter and dimension parameter are processed to obtain source station load data, back-to-source status data, and client behavioral data; the source station load data, the back-to-source status data, and the client behavioral data are analyzed to obtain prediction data; the source station service status is determined based on the prediction data; when the source station service status is abnormal, a corresponding control strategy is generated by integrating the collected indicator parameter and dimension parameter; and the control strategy is executed. Via a relatively precise prediction, protection of the source station may become more timely and accurate. Under conditions where the source station service encounters an issue, the service quality of the client may be maximally ensured via the differentiation configuration. Through analysis of big data, the reason leading to the issue of the source station service may be found as much as possible, and whether the source station is truly stable and is able to fully recover service may be automatically and more vividly determined.

### Example 2

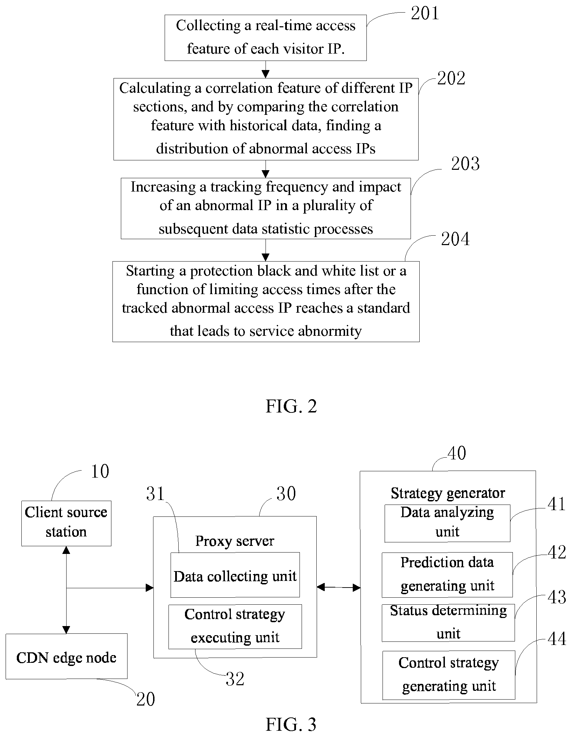

Referring to FIG. 2, Example 2 of the present disclosure provides a method for protecting CDN client source station, comprising Step 201∼Step 204, as described hereinafter in detail. Example 2 is not part of the invention as such claimed.

In Step 201: a real-time access feature of an access IP of each visitor is collected.

The access feature includes at least one of the number of access times, the access time distribution, and the access content.

In Step 202: a correlation feature of different IP sections is calculated, and by comparing the correlation feature with historical data, a distribution of abnormal access IPs is found.

In Step 203: a tracking frequency and impact of an abnormal access IP are increased in a plurality of subsequent data statistic processes.

In Step 204: a protection black-and-white list or a function that limits a number of access times is started after the tracked abnormal access IP reaches a standard that leads to service abnormity.

In the disclosed method for protecting CDN client source station, the real-time access feature of an IP of each visitor is collected; the a correlation feature of different IP sections is calculated, and by comparing the correlation feature with historical data, the distribution of abnormal access IPs is determined; the tracking frequency and impact of an abnormal access IP are increased in a plurality of subsequent data statistic processes; and the protection black-and-white list or a function that limits a number of access times is started after the tracked abnormal access IP reaches a standard that leads to service abnormity, thereby obtaining the prediction data.

### Example 3

Referring to FIG. 3, Example 3 of the present disclosure provides a system for protecting CDN client source station that corresponds to the method for protecting CDN client source station as illustrated in FIG. 1. Accordingly, the details of the method for protecting CDN client source station in Example 1 may be implemented herein, thereby achieving the same effect. The system may include a client source station 10, a CDN edge node 20, a proxy server 30, and a strategy generator 40. The proxy server 30 includes a data collecting unit 31 and a control strategy executing unit 32. The strategy generator 40 includes a data analyzing unit 41, a prediction data generating unit 42, a status determining unit 43, and a control strategy generating unit 44.

The data collecting unit 31 is configured to collect an indicator parameter from a client source station and collect a dimension parameter from a CDN edge node.

The indicator parameter includes at least one of an IO consumption and a load consumption. The dimension parameter includes a back-to-source bandwidth, a back-to-source request number, current connection data, back-to-source time, a back-to-source status code ratio, and a feature of an IP that requests the source station.

More specifically, the client source station provides an API interface, and invokes the API interface periodically, thereby collecting and establishing with a client the indicator parameter that feedbacks a service ability of the source station. The CDN edge node provide an API interface, and invokes the API interface periodically, thereby collecting various dimension parameters of the CDN edge node.

The data analyzing unit 41 is configured to process the collected indicator parameter and dimension parameter to obtain source station load data, back-to-source status data, and client behavioral data.

More specifically, mean value calculation is performed after de-noising using the collected load data of the source station, and a current status of the source station is calculated by comparison with a historical numerical value from a dimension of a service ability of the source station. The service ability is calculated after de-noising using the collected back-to-source status data.

For data of each dimension, a corresponding impact ratio coefficient is configured, different impact ratio coefficients reflect a judging standard of the impact of such data on service stability of an actual client source station, and the sum of different weights is 100. More specifically, an abnormal score of the back-to-source bandwidth = an amplitude that the back-to-source bandwidth deviates from the abnormal value * a weight coefficient of the back-to-source bandwidth. An abnormal score of the back-to-source request number = an amplitude of the abnormal value of the back-to-source request number * a weight coefficient of the back-to-source request number. An abnormal score of the response time of the back-to-source request = an amplitude of the abnormal value of the back-to-source response time * a weight coefficient of the back-to-source response time. An abnormal score of the responsive status code ratio of the back-to-source request = an amplitude of the abnormal value of the responsive status code ratio * a weight coefficient of the responsive status code ratio of the back-to-source request. An abnormal score of a current source station connection number = an amplitude of the abnormal value of the current source station connection number * a weight abnormal coefficient of the current source station connection number. The source station status value = an abnormal score of back-to-source bandwidth + an abnormal score of back-to-source request number + an abnormal score of response time of a back-to-source request + an abnormal score of a responsive status code ratio of the back-to-source request + an abnormal score of a current source station connection number. Further, the higher the source station status value, the poorer the service ability, and the lower the source station status value, the stronger the service ability. It should be noted that, the abnormal points considered by different client source station may be different, and determination may be performed based on actual abnormal points.

The prediction data generating unit 42 is configured to obtain prediction data after analyzing the source station load data, the back-to-source status data, and the client behavioral data.

Further, for the data after statistical analysis, a prediction method may be used again to improve timeliness. The load is used as an example, and a function of cubic spline interpolation is used. A first derivative and a second derivative are first obtained, if the rate is positive, the load is indicated to increase, and if the acceleration is negative, the rate is indicated to decrease and finally change to 0. The cubic spline interpolation function may predict a relatively complex mode, and is not limited to predict linear modes. The interpolation function may solve the vibration problem: the indicator collection and the reaction delay may indicate that the value is outdated, the interpolation may reduce error, the prediction may be more accurate, and the vibration may be decreased. Via loading, the preset value may be approached. The current predictions are all based on the first three time intervals, and under situations where time interval is relatively short, the obtained results are almost real-time result.

The status determining unit 43 is configured to determine a source station service status based on the prediction data.

More specifically, a subsequent value is deduced via a previous value and a current value and based on multi-dimensional data such as back-to-source time of a CDN node, a responsive status code ratio, and a current actual normal or abnormal connection number, thereby obtaining relatively accurate prediction data. Further, based on the prediction data, the source station service status may be determined.

The control strategy generating unit 44 is configured to, when the source station service status is abnormal, generate a corresponding control strategy in conjunction with the collected indicator parameter and dimension parameter.

In particular, the control strategy at least includes a regional control strategy (control is performed with reference to regional features of different IPs), a service control strategy, a black and white name strategy, and an access number restriction strategy.

When the source station service encounters an issue, control is carried out on different aspects including specific IP, specific region of visiting client, and specific client service. Under situations where the service ability of the source station is ensured, effective source station access may be maximally provided, thereby ensuring the client's benefits.

The control strategy executing unit 32 is configured to execute the control strategy.

More specifically, based on the abnormal points fed back by the source station, for different abnormal conditions and major factors that affect the abnormity, different types of control strategies may be generated by integrating the differential demand of the source station client, such as the high-to-low preference of the visiting region, and the high-to-low preference of the source station related service, etc. After the proxy server receives the information, different strategies may be applied to invoke API interfaces that are not used by the CDN edge node to convey the strategy, thereby realizing protection of the source station.

In the disclosed system for protecting the CDN client source station, the indicator parameter is collected from the client source station, and the dimension parameter is collected from the CDN edge node; the collected indicator parameter and dimension parameter are processed to obtain source station load data, back-to-source status data, and client behavioral data; the source station load data, the back-to-source status data, and the client behavioral data are analyzed to obtain prediction data; the source station service status is determined based on the prediction data; when the source station service status is abnormal, a corresponding control strategy is generated by integrating the collected indicator parameter and dimension parameter; and the control strategy is executed. Via a relatively precise prediction, protection of the source station may become more timely and accurate. Under conditions where the source station service encounters an issue, the service quality of the client may be maximally ensured via the differentiation configuration. Through analysis of big data, the reason that causes the issue of the source station service may be found to the greatest degree, and whether the source station is truly stable and is able to fully recover service may be automatically and more vividly determined.

### Example 4

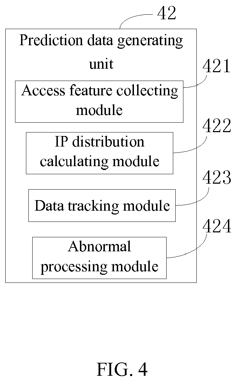

Referring to FIG. 4, Example 4 of the present disclosure provides a system for protecting CDN client source station that corresponds to the multi-tenant network optimization method as illustrated in FIG. 2, thereby realizing details of the method for protecting CDN client source station in Example 1 and achieving the same effects. Example 4 is not part of the invention as claimed.

In the disclosed system for protecting CDN client source station, the prediction data generating unit 42 includes:

an access feature collecting module 421, configured to collect a real-time access feature of an IP of each visitor;

where, the access feature includes at least one of the number of access times, the access time distribution, and the access content.

an IP distribution calculating module 422, configured to calculate a correlation feature of different IP sections, and by comparing the correlation feature with historical data, find a distribution of abnormal access IPs.

a data tracking module 423, configured to increase a tracking frequency and impact of an abnormal access IP in a plurality of subsequent data statistic processes; and

an abnormity processing module 424, configured to start a protection black-and-white list or a function that limits a number of access times after the tracked abnormal IP reaches a standard that leads to service abnormity.

In the disclosed system for protecting CDN client source station, the real-time access feature of each visitor IP is collected; the correlation feature of different IP sections is calculated, and by comparing the correlation feature with historical data, the distribution of abnormal access IPs is found; the tracking frequency and impact of an abnormal access IP are increased in a plurality of subsequent data statistic processes; and the protection black-and-white list or the function that limits a number of access times is started after the tracked abnormal IP reaches a standard that leads to service abnormity, thereby obtaining the prediction data.

The sequence of the examples described above is merely for illustrative purposes, and does not represent any preference.

The system examples described above are merely for illustrative purpose. The units described as separated parts may or may not be physically detached. The parts displayed as units may or may not be physical units, i.e., may be located at one place, or distributed at a plurality of network units. Based on the actual needs, a part or all of the modules may be selected to achieve the objective of the examples. Those ordinarily skilled in the art may understand and implement the disclosed examples without contributing creative labor.

Through the descriptions of various aforementioned examples, those skilled in the art may clearly understand that the examples may be implemented by means of software in conjunction with an essential common hardware platform, or may be simply implemented by hardware. Based on such understanding, the essential part of the aforementioned technical solutions or the part that contribute to the prior art may be embodied in the form of software products. The software products may be stored in computer readable storage media, such as ROM/RAM, magnetic disk, and optical disk, etc., and may include a plurality of instructions to enable a computer device (may be a personal computer, a server, or a network device) to execute the methods described in various examples or parts of the examples.

## Claims

1. A method for protecting a content delivery network, CDN, source station of a client, comprising:
collecting (101) an indicator parameter from a source station (10) of a client, and collecting a dimension parameter from a CDN edge node, wherein the indicator parameter includes at least one of an IO consumption or a load consumption, and the dimension parameter includes a back-to-source bandwidth, a back-to-source request number, current connection data, back-to-source time, a back-to-source status code ratio, and a feature of an IP that requests the source station (10) of the client;
obtaining (102,103) prediction data by processing the indicator parameter and the dimension parameter;
determining (104) a source station service status, of the source station (10), based on the prediction data;
when the source station service status is abnormal, determining (105) different abnormal conditions, and generating a corresponding control strategy in conjunction with the collected indicator parameter and dimension parameter; and
executing (106) the control strategy,
wherein obtaining (102,103) the prediction data includes: performing a calculation: a source station status value = an abnormal score of the back-to-source bandwidth + an abnormal score of the back-to-source request number + an abnormal score of the back-to-source time + an abnormal score of the back-to-source status code ratio + an abnormal score of a current source station connection number.

2. The method according to claim 1, wherein a step of obtaining the prediction data comprises:
collecting (201) a real-time access feature of an access IP of each visitor; and
calculating (202) a correlation feature of different IP sections, and by comparing the correlation feature with historical data, finding a distribution of abnormal access IPs.

3. The method according to claim 2, wherein after calculating a correlation feature of different IP sections, and by comparing the correlation feature with historical data, finding a distribution of abnormal access IPs, the method includes:
increasing (203) a tracking frequency and impact of an abnormal access IP in a plurality of subsequent data statistic processes; and
starting (204) a protection black-and-white list or a function that limits a number of access times after the tracked abnormal access IP reaches a standard that leads to service abnormity.

4. The method according to claim 1, wherein a higher source station status value indicates a poorer service ability, and a lower the source station status value indicates a stronger service ability.

5. The method according to claim 1, wherein after the step of obtaining the prediction data, the method further includes:
performing a re-prediction on the prediction data.

6. A system for protecting CDN source station (10) of a client, comprising:
a source station of a client, a CDN edge node (20), a proxy server (30), and a strategy generator (40), the proxy server including a data collecting unit (31) and a control strategy executing unit (32), and the strategy generator (40) including a data analyzing unit (41), a prediction data generating unit (42), a status determining unit (43), and a control strategy generating unit (44), wherein:
the data collecting unit (31) is configured to collect an indicator parameter from the source station (10) of the client and collect a dimension parameter from a CDN edge node, wherein the indicator parameter includes at least one of an IO consumption and a load consumption, and the dimension parameter includes a back-to-source bandwidth, a back-to-source request number, current connection data, back-to-source time, a back-to-source status code ratio, and a feature of an IP that requests the source station (10) of the client;
the prediction data generating unit (42) is configured to obtain prediction data by processing the collected indicator parameter and dimension parameter, wherein obtaining the prediction data includes performing the following calculation: a source station status value = an abnormal score of the back-to-source bandwidth + an abnormal score of the back-to-source request number + an abnormal score of the back-to-source time + an abnormal score of the back-to-source status code ratio + an abnormal score of a current source station connection number;
the status determining unit (43) is configured to determine a source station service status based on the prediction data;
the control strategy generating unit (44) is configured to, when the source station service status is abnormal, determine different abnormal conditions, and generate a corresponding control strategy in conjunction with the collected indicator parameter and dimension parameter; and
the control strategy executing unit is configured to execute the control strategy.

7. The system according to claim 6, wherein the prediction data generating unit includes:
an access feature collecting module (421), configured to collect a real-time access feature of an IP of each visitor; and
an IP distribution calculating module (422), configured to calculate a correlation feature of different IP sections, and by comparing the correlation feature with historical data, find a distribution of abnormal access IPs.

8. The system according to claim 7, wherein the prediction data generating unit further includes:
a data tracking module (423), configured to increase a tracking frequency and impact of an abnormal access IP in a plurality of subsequent data statistic processes; and
an abnormal processing module (424), configured to start a protection black-and-white list or a function that limits a number of access times after the tracked abnormal IP reaches a standard that leads to service abnormity.

9. The system according to claim 6, wherein the prediction data generating unit (42) is further configured to perform re-prediction on the prediction data using a prediction mode.

## Patentansprüche

1. Eine Methode zum Schutz einer Quellstation eines Inhaltsbelieferungnetzwerks, CDN, eines Kunden, die Folgendes umfasst:
Erfassen (101) eines Indikatorparameters einer Quellstation (10) eines Kunden und Erfassung eines Dimensionsparameters eines CDN-Randknotens, wobei der Indikatorparameter mindestens einen von beiden, d.h. der I/O-Verbrauch oder ein Belastungsverbrauch, einschliesst, und der Dimensionsparameter eine Bandbreite zurück zur Quelle, eine Abrufszahl zurück zur Quelle, laufende Verbindungsdaten, die Zeit zurück zur Quelle, einen Kodequotientstatus zurück zur Quelle und ein Merkmal eines IP, der die Quellstation (10) des Kunden abruft einschliesst;
Erhalt (102, 103) von Vorhersagedaten durch Verarbeitung des Indikatorparameters und des Dimensionsparameters;
Bestimmung (104) eines Quellstationsservicestatus der Quellstation (10) basierend auf den Vorhersagedaten;
wenn der Quellstationsdienststatus anormal ist, Bestimmung (105) von verschiedenen anormalen Bedingungen und Erzeugung einer entsprechenden Kontrollstrategie in Verbindung mit dem erfassten Indikatorparameter und Dimensionsparameter; und
Ausführen (106) der Kontrollstrategie,
wobei der Erhalt (102, 103) der Vorhersagedaten Folgendes einschliesst:
Durchführung einer Berechnung: eines Quellstationsstatuswertes = ein anormaler Stand der Bandbreite zurück zur Quelle + ein anormaler Stand der Abrufszahl zurück zur Quelle + ein anormaler Stand der Zeit zurïck zur Quelle + ein anormaler Stand des Kodequotientstatus zurück zur Quelle + ein anormaler Stand einer laufenden Quellstation-Verbindungszahl.

2. Die Methode gemäss Anspruch 1, bei der ein Schritt zum Erhalt der Vorhersagedaten Folgendes umfasst:
Erfassung (201) einer Echtzeitzugriffsfunktion eines Zugriffs-IPs eines jeden Besuchers; und Berechnung (202) einer Korrelationsfunktion verschiedener IP-Abschnitte und mittels des Vergleichs der Korrelationsfunktion mit den historischen Daten Finden einer Vergabe von anormalen Zugriffs-IPs.

3. Die Methode gemäss Anspruch 1, bei der nach der Berechnung einer Korrelationsfunktion der verschiedenen IP-Abschnitte, und durch Vergleich der Korrelationsfunktion mit den historischen Daten unter Finden einer Vergabe von anormalen Zugriffs-IPs die Methode Folgendes einschliesst:
Erhöhen (203) einer Nachvollziehungsfrequenz und der Auswirkung eines anormalen Zugriffs-IPs in einer Mehrzahl von nachfolgenden Datenstatistikvorgängen; und
Starten (204) einer Schutz-schwarz-weiss-Liste oder einer Funktion, die eine Anzahl von Zugriffszeiten begrenzt, nachdem der anormale, nachvollzogene Zugriffs-IP einen Standard erreicht, der zu einer Serviceanomalie führt.

4. Die Methode gemäss Anspruch 1, bei der ein höherer Quellstationsstatuswert eine stärkere Power-Service-Fähigkeit zeigt.

5. Die Methode gemäss Anspruch 1, bei der nach dem Schritt zum Erhalt der Vorhersagedaten die Methode weiter Folgendes einschliesst:
Durchführung einer erneuten Vorhersage mit bezug auf die Vorhersagedaten.

6. Ein System zum Schutz einer CDN-Quellstation (10) eines Kunden, das Folgendes umfasst:
Eine Quellstation eines Kunden, einen CDN-Randknoten (20), einen Proxy Server (30) und einen Strategieerzeuger (40), wobei der Proxy Server eine Datenerfassungseinheit (31) und eine Ausführungseinheit der Kontrollstrategie 32) einschliesst und der Strategieerzeuger eine Datenanalyseneinheit (41), eine Erzeugungseinheit (42) für Vorhersagedaten, eine Statusbestimmungseinheit (43) und eine Erzeugungseinheit (44) der Kontrollstrategie (44) einschliesst, wobei
die Datenerfassungseinheit (31) konfiguriert ist, um einen Indikatorparameter von der Quellstation (10) des Kunden zu erfassen und einen Dimensionsparameter vom CDN-Randkoten zu erfassen, wobei der Indikatorparameter mindestens einen von den beiden, ein IO-Verbrauch und
ein Belastungsverbrauch einschliesst, und der Dimensionsparameter eine Bandbreite zurück zur Quelle, eine Abrufnummer zurück zur Quelle, laufende Verbindungsdaten, eine Zeit zurück zur Quelle, einen Kodequotientstatus zurück zur Quelle und eine Funktion eines IPs, der die Quellstation (10) des Kunden abruft einschliesst;
die Erzeugungseinheit (42) für Vorhersagedaten konfiguriert ist, um Vorhersagedaten durch Verarbeitung des erfassten Indikatorparameters und Dimensionsparameters zu erhalten, wobei der Erhalt der Voroaussagedaten die Ausführung folgender Berechnung einschliesst:
ein Quellstationsstatuswert = ein anormaler Stand der Bandbreite zurück zur Quelle + ein anormaler Stand der Abrufszahl zurück zur Quelle + ein anormaler Stand der Zeit zurïck zur Quelle + ein anormaler Stand des Kodequotientstatus zurück zur Quelle + ein anormaler Stand einer laufenden Quellstation-Verbindungszahl.
die Statusbestimmungseinheit (43) konfiguriert ist um einen Servicestatus der Quellstation basierend auf den Vorhersagedaten zu bestimmen;
die Erzeugungseinheit (44) der Kontrollstrategie konfiguriert ist, wenn der Servicestatus der Quellstation anormal ist, um verschiedene, anormale Bedingungen zu bestimmen und eine entsprechende Kontrollstrategie in Verbindung mit dem erfassten Indikatorparameter und Dimensionsparameter zu bestimmen, und
die Ausführungseinheit der Kontrollstrategie konfiguriert ist, um die Kontrollstrategie auszuführen.

7. Das System gemäss Anspruch 6, bei dem die Erzeugungseinheit der Vorhersagedaten ein Erfassungsmodul für Zugriffsfunktionen (421) einschliesst, das konfiguriert ist, um eine Zugriffsfunktion in Echtzeit eines IPs eines jeden Besuchers zu erfassen, und
ein IP-Vergabeberechnungsmodul (422) konfiguriert ist, um eine Korrelationsfunktion von verschiedenen IP-Abschnitten zu berechnen und mittels Vergleich der Korrelationsfunktion mit den historischen Daten eine Vergabe von anormalen Zugriffs-IPs zu finden.

8. Das System gemäss Anspruch 7, bei dem die Erzeugungseinheit der Vorhersagedaten weiter Folgendes einschliesst:
Ein Datenverfolgungsmodul (423), das konfiguriert ist, um eine Nachvollziehungsfrequenz und die Auswirkung eines anormalen Zugriffs-IPs in einer Vielzahl von aufeinanderfolgenden Datenstatistikprozessen zu erhöhen; und
ein Modul (424) für anormale Verarbeitung, das konfiguriert ist, um eine Schutz-schwarz-weiss-Liste oder eine Funktion zu starten, die eine Anzahl von Zugriffszeiten begrenzt, nachdem der nachvollzogene normale IP einen Standardwert erreicht, der zu einer Serviceanomalie führt.

9. Das System gemäss Anspruch 6, bei dem die Erzeugungseinheit (42) der Vorhersagedaten konfiguriert ist, um eine Wiedervorhersage der Vorhersagedaten unter Anwendung eines Vorhersagemodus durchzuführen.

## Revendications

1. Une méthode de protection d'une station source d'un client d'un réseau de diffusion de contenus (CDN), comprenant les pas suivants:
collecter (101) un paramètre indicateur d'une station source (10) d'un client, et collecter un paramètre de dimensionnement d'un nœud périphérique du CDN, où le paramètre indicateur comprend au moins une consommation IO ou une consommation de charge, et le paramètre de dimensionnement comprend une bande passante de retour à la source, un numéro de demande de retour à la source, des données de connexion en cours, le temps de retour à la source, un taux de codes de statut de retour à la source et une fonction d'une IP qui demande la station source (10) du client;
obtenir (102,103) les données de prédiction au moyen du traitement du paramètre indicateur et du paramètre de dimensionnement;
déterminer (104) un statut de service de la station source, de la station source (10), sur la base des données de prédiction;
lorsque le statut de service de la station source est anormal, déterminer (105) différentes conditions anormales et générer la stratégie de contrôle correspondante conjointement avec le paramètre indicateur et le paramètre de dimensionnement collectés; et
exécuter (106) la stratégie de contrôle;
où l'obtention (102,103) des données de prédiction comprend les pas suivants: effectuer un calcul comme suit: la valeur du statut de la station source = une ponctuation anormale de la bande passante de retour à la source + une ponctuation anormale du numéro de demande de retour à la source + une ponctuation anormale du temps de retour à la source + une ponctuation anormale du taux de codes de statut de retour à la source + une ponctuation anormale du numéro de connexion de la station source en cours.

2. La méthode conformément à la revendication 1 où l'obtention des données de prédiction comprend les pas suivants:
collecter (201) une fonction d'accès en temps réel d'une IP d'accès de chaque visiteur; et
calculer (202) une fonction de corrélation de différentes sections de l'IP, et, au travers de la comparaison de la fonction de corrélation avec les données historiques, trouver une distribution des IP d'accès anormaux.

3. La méthode conformément à la revendication 2, où, après avoir calculé une fonction de corrélation des différentes sections de l'IP, et après avoir comparé la fonction de corrélation avec les données historiques, avoir trouvé une distribution des IP d'accès anormaux, la méthode comprend les pas suivants:
augmenter (203) la fréquence et l'impact du suivi des IP d'accès anormaux au sein d'une série de processus de statistiques de données subséquents; et
initier (204) une liste blanche et noire de protection ou une fonction qui limite un nombre de temps d'accès, une fois que l'IP d'accès anormaux suivis atteint une valeur standard qui conduit à une anormalité de service.

4. La méthode conformément à la revendication 1, où une valeur élevée de statut de station source indique une capacité moindre de service, et une valeur inférieure de statut de station source indique une capacité supérieure de service.

5. La méthode conformément à la revendication 1, où après avoir obtenu les données de prédiction, elle comprend en outre les pas suivants:
exécution d'une re-prédiction sur les données de prédiction.

6. Un système de protection de la station source (10) d'un client d'un réseau de diffusion de contenus (CDN), comprenant les éléments suivants:
une station source d'un client, un nœud périphérique CDN (20), un serveur proxy (30) et un générateur de stratégies (40); le serveur proxy comprenant une unité de collecte de données (31) et une unité d'exécution de stratégies de contrôle (32 ; et le générateur de stratégies (40) comprenant une unité d'analyse de données (41), une unité de génération de données de prédiction (42), une unité de détermination de statuts (43) et une unité de génération de stratégies de contrôle (44), où:
l'unité de collecte de données (31) est configurée pour collecter un paramètre indicateur de la station source (10) du client et collecter un paramètre de dimensionnement d'un nœud périphérique CDN, où le paramètre indicateur comprend au moins une consommation IO et une consommation de charges, et le paramètre de dimensionnement comprend une bande passante de retour à la source, un numéro de demande de retour à la source, des données de connexion en cours, le temps de retour à la source, le taux de codes de statuts de retour à la source et une fonction d'une IP qui demande la station source (10) du client;
l'unité de génération de données de prédiction (42) est configurée pour obtenir des données de prédiction en traitant le paramètre indicateur et le paramètre de dimensionnement collectés, où l'obtention des données de prédiction comprend l'exécution du calcul suivant: la valeur du statut de la station source = une ponctuation anormale de la bande passante de retour à la source + une ponctuation anormale du numéro de demande de retour à la source + une ponctuation anormale du temps de retour à la source + une ponctuation anormale du taux de codes de statut de retour à la source + une ponctuation anormale du numéro de connexion de la station source en cours;
l'unité de détermination de statuts (43) est configurée pour déterminer un statut de station source sur la base des données de prédiction;
l'unité de génération de stratégies de contrôle (44) est configurée de manière à ce que, lorsque le statut du service de la station source est anormal, déterminer les différentes conditions anormales et générer la stratégie de contrôle correspondante conjointement avec le paramètre indicateur et le paramètre de dimensionnement collectés; et
l'unité d'exécution des stratégies de contrôle est configurée pour exécuter la stratégie de contrôle.

7. Le système conformément à la revendication 6, où l'unité de génération de données de prédiction comprend:
un module de collecte des fonctions d'accès (421), configuré pour collecter la fonction d'accès en temps réel d'une IP de chaque visiteur; et
un module de calcul des distributions des IP (422), configuré pour calculer une fonction de corrélation des différentes sections de l'IP, et en comparant la fonction de corrélation avec les données historiques, trouver une distribution des IP d'accès anormaux.

8. Le système conformément à la revendication 7, où l'unité de génération de données de prédiction comprend en outre:
un module de suivi de données (423), configuré pour augmenter la fréquence et l'impact du suivi d'une IP d'accès anormaux dans une série de processus de statistiques de données subséquents; et
un module de processus anormaux (424) configuré pour initier une liste de protection blanche et noire ou une fonction qui limite le nombre de temps d'accès après que l'IP anormale suivie atteint une valeur standard qui conduit à une anormalité de service.

9. Le système conformément à la revendication 6, où l'unité de génération de données de prédiction (42) est configurée en outre pour effectuer la re-prédiction des données de prédiction en utilisant un mode de prédiction.
